# EUROPÄISCHE PATENTSCHRIFT

(11) **EP 3 679 402 B1**
(45) Veröffentlichungstag und Bekanntmachung des Hinweises auf die Patenterteilung: **12.10.2022**
(21) Anmeldenummer: 18758596.3
(22) Anmeldetag: 21.08.2018
(51) Int. Cl.: G01S 17/02, G01S 17/48, G01S 17/86, G01S 17/08, G01S 7/51

(54) **VERFAHREN ZUM BETRIEB EINES LASERENTFERNUNGSMESSGERÄTS**
METHOD FOR OPERATION OF A LASER RANGE FINDER
PROCÉDÉ D' OPÉRATION D'UN TÉLÉMÈTRE LASER

(30) Priorität: 07.09.2017 DE 102017215766
(43) Veröffentlichungstag der Anmeldung: 15.07.2020
(73) Patentinhaber: Robert Bosch GmbH, 70442 Stuttgart (DE)
(72) Erfinder: BRAUN, Andreas, 70736 Fellbach (DE); NOE, Stefan, 70563 Stuttgart (DE); SCHMIDTKE, Bernd, 71229 Leonberg (DE)
(86) Internationale Anmeldenummer: PCT/EP2018/072487
(87) Internationale Veröffentlichungsnummer: WO 2019/048227

(56) Entgegenhaltungen:
- EP-A1- 1 628 141
- EP-A2- 3 015 881
- WO-A1-03/008909
- DE-A1- 10 055 510

## Beschreibung

### Stand der Technik

Die vorliegende Erfindung betrifft ein Verfahren zum Betrieb eines Laserentfernungsmessgeräts, insbesondere eines handgehaltenen Laserentfernungsmessgeräts.

Es sind bereits Verfahren zum Betrieb von Laserentfernungsmessgeräten vorgeschlagen worden, beispielsweise in DE 10 2012 214 880 A1, in EP 2669707 A1, in DE 100 55 510 A1, in WO 03/008909 A1 oder in EP 3 015 881 A2. Ferner ist aus EP 1 628 141 A1 ein Triangulationsverfahren zur Entfernungsbestimmung bekannt, das unter Verwendung von Mono-Kameras an Fahrzeugen realisiert wird.

Vor diesem Hintergrund werden ein Verfahren zum Betrieb eines Laserentfernunsmessgeräts sowie ein Laserentfernunsmessgerät gemäß den unabhängigen Ansprüchen vorgestellt.

### Offenbarung der Erfindung

Das vorgeschlagene Verfahren zum Betrieb eines Laserentfernungsmessgeräts, insbesondere eines handgehaltenen Laserentfernungsmessgeräts, geht aus von einem Verfahren, bei dem Laserstrahlung mittels einer Sendeeinrichtung zu einem Zielpunkt ausgesendet wird, von dem Zielpunkt zurückgestrahlte Laserstrahlung mittels einer Empfangseinrichtung mit einer Detektionsfläche erfasst wird, mit zumindest einer Kamera zumindest ein Bild zumindest einer Zielumgebung des Zielpunkts erfasst wird sowie eine Darstellung des Bilds überlagert mit einer Markierung des Zielpunkts auf einem Bildschirm des Laserentfernungsmessgeräts ausgegeben wird. Erfindungsgemäß wird ein Parallaxenfehler in der Darstellung des Bilds überlagert mit der Markierung des Zielpunkts in Abhängigkeit einer geschätzten Entfernung zum Zielpunkt korrigiert.

Das Laserentfernungsmessgerät, insbesondere dessen funktionale Komponenten Sendeeinrichtung, Empfangseinrichtung und Recheneinheit, ist dazu vorgesehen, zeitlich modulierte Laserstrahlung in Form eines Laserstrahls in Richtung auf ein Zielobjekt hin, dessen Entfernung zu dem Messgerät ermittelt werden soll, auszusenden. Derjenige Punkt, an dem der ausgesendete Laserstrahl auf das Zielobjekt trifft, wird im Folgenden "Zielpunkt" genannt. Die Richtung im dreidimensionalen Raum, in die der Laserstrahl auf das Zielobjekt hin ausgesendet wird, wird im Folgenden als Entfernungsmessrichtung bezeichnet. Bezogen auf das Laserentfernungsmessgerät ist die Entfernungsmessrichtung durch die Konstruktion definiert, insbesondere durch die Anordnung der Sendeeinrichtung in einem Gehäuse des Laserentfernungsmessgeräts. Die Begriffe "Laserstrahlung" und "Laserstrahl" werden im Folgenden synonym verwendet. Die Konzepte der Laserentfernungsmessung sind dem Fachmann bekannt.

Unter "vorgesehen" soll im Folgenden speziell "programmiert", "ausgelegt", "konzipiert" und/oder "ausgestattet" verstanden werden. Darunter, dass ein Objekt zu einer bestimmten Funktion "vorgesehen" ist, soll insbesondere verstanden werden, dass das Objekt diese bestimmte Funktion in zumindest einem Anwendungs- und/oder Betriebszustand erfüllt und/oder ausführt oder dazu ausgelegt ist, die Funktion zu erfüllen.

Eine von dem angepeilten Zielobjekt reflektierte oder gestreute, d.h. zurückgestrahlte, Laserstrahlung wird von dem Laserentfernungsmessgerät, insbesondere von der Empfangseinrichtung des Laserentfernungsmessgeräts, zumindest teilweise detektiert und zur Ermittlung der präzise zu messenden Entfernung in der Entfernungsmessrichtung verwendet. Die Empfangseinrichtung ist dabei zum Detektieren von zurückgestrahlter Laserstrahlung ausgebildet und weist zumindest eine zweidimensionale Detektionsfläche mit einer Vielzahl von Pixeln auf. Jedes Pixel ist dazu vorgesehen, abhängig von einer auftreffenden Lichtintensität zurückgestrahlter Laserstrahlung ein Detektionssignal zu erzeugen und zur weiteren Verarbeitung, insbesondere an die Recheneinheit oder an eine Steuervorrichtung des Laserentfernungsmessgeräts, auszugeben. Unter "Pixel" werden laserstrahlungsempfindliche Elemente wie Fotodioden, beispielsweise Pin-Dioden oder Avalanche-Fotodioden (APD), oder dergleichen verstanden. In einer Ausführungsform des Laserentfernungsmessgerätes wird die Detektionsfläche durch eine zweidimensionale Anordnung ("Array") einer Vielzahl von Single-Photon-Avalanche-Dioden (SPADs) gebildet. Beispielhaft kann die Detektionsfläche aus 32x32 in einer Matrix angeordneten SPADs bestehen.

Das Laserentfernungsmessgerät dient dem berührungslosen Messen einer Entfernung zu dem Zielpunkt. Aus einem zwischen der ausgesendeten Laserstrahlung und der von der Oberfläche des Zielobjekts reflektierten Laserstrahlung mittels der Recheneinheit oder mittels der Empfangseinrichtung durchgeführten Phasenvergleich kann eine Lichtlaufzeit ermittelt und über die Lichtgeschwindigkeit die gesuchte Entfernung zwischen dem Laserentfernungsmessgerät und dem Zielobjekt, insbesondere zwischen dem Laserentfernungsmessgerät und dem Zielpunkt in entsprechender Entfernungsmessrichtung, bestimmt werden. Alternativ kann die Lichtlaufzeit auch aus einer Flugzeitbestimmung ermittelt werden, wie dies dem Fachmann bekannt ist. Die ermittelte Entfernung, d.h. der Entfernungsmesswert, kann anschließend mittels einer Auswerte- oder Steuervorrichtung des Laserentfernungsmessgeräts weiter verarbeitet und/oder unter Verwendung einer Ausgabevorrichtung wie einem Bildschirm an einen Benutzer des Laserentfernungsmessgeräts ausgegeben werden.

In einer Ausführungsform ist das Laserentfernungsmessgerät als ein handgehaltenes Messgerät realisiert, das ohne Zuhilfenahme einer Transport- und/oder Haltevorrichtung lediglich mit den Händen, bevorzugt mit einer Hand, geführt werden kann. Dazu beträgt die Gesamtmasse des Laserentfernungsmessgeräts insbesondere weniger als 500 g, bevorzugt weniger als 300 g, besonders bevorzugt weniger als 200 g. In einer Ausführungsform des Laserentfernungsmessgeräts sind alle Komponenten des Messgeräts in einem die Komponenten im Wesentlichen umschließenden Gehäuse untergebracht. Insbesondere beträgt die Länge der längsten Seite dieses Gehäuses weniger als 30 cm, bevorzugt weniger als 20 cm, besonders bevorzugt weniger als 15 cm.

Das Laserentfernungsmessgerät weist erfindungsgemäß eine Kamera zur Erfassung zumindest eines Bildes einer Zielumgebung eines jeweilig anvisierten Zielpunkts auf. Die Kamera kann in einer Ausführungsform als ein CCD-Chip oder ein anderweitiges, insbesondere im visuellen Spektrum sensitives, Bilderfassungsmittel realisiert sein. In einer Ausführungsform der Kamera ist diese als eine Fix-Fokus-Kamera ausgeführt, d.h. die Kameraoptik weist einen unveränderbaren Fokus auf. Alternativ kann die Kamera als automatisch fokussierende Kamera realisiert sein. In einer Ausführungsform weist die Kamera eine fixe Vergrößerung bzw. Zoom-Stufe auf. Alternativ kann die Kamera auch eine Zoom-Funktionalität aufweisen. Mittels der Kamera kann ein Bild zumindest der Zielumgebung des Zielpunkts aufgenommen werden. Die Zielumgebung um den entsprechenden Zielpunkt ist dabei insbesondere über denjenigen Raum- oder Erfassungswinkel definiert, aus dem mittels der Optik der Kamera Licht gesammelt und zu einem Bild umgewandelt wird. In einer Ausführungsform kann das Bild der Zielumgebung eines Zielpunktes unter Verwendung strahlformender und/oder strahllenkender optischer Elemente, insbesondere beispielsweise unter Verwendung von Linsen, diffraktiven Elementen, Spiegeln oder dergleichen, verändert, insbesondere verkleinert oder vergrößert werden. Alternativ oder zusätzlich hierzu kann das Bild der Zielumgebung eines Zielpunktes auch softwaregestützt verändert, insbesondere vergrößert oder verkleinert, werden. Es sei an dieser Stelle darauf hingewiesen, dass auch ein Teil des von der Zielumgebung eines Zielpunktes aufgenommenen Bilds selbst wieder ein Bild der Zielumgebung des Zielpunktes darstellt. Somit gilt im Rahmen dieser Schrift jeder Teilausschnitt eines Bilds von der Zielumgebung eines Zielpunktes auch selbst als ein Bild der Zielumgebung des Zielpunktes.

Das Laserentfernungsmessgerät weist einen Bildschirm auf, wobei mittels des Bildschirms ein mit der Kamera erfasstes Bild oder ein Teilbereich eines Bilds darstellbar ist. Dabei ist im Betrieb des Laserentfernungsmessgerätes mit dem Bild überlagert oder überblendet zumindest eine Markierung darstellbar, die den Zielpunkt, an dem der Laserstrahl das Zielobjekt trifft, in dem ausgegebenen Bild, insbesondere dem ausgegebenen Teilbereich des Bilds, kennzeichnet bzw. markiert.

Ferner weist das Laserentfernungsmessgerät eine Recheneinheit auf. Die Recheneinheit weist insbesondere Komponenten auf, die zumindest einen Prozessor, einen Speicher und ein Betriebsprogramm mit Auswerte- und Berechnungsroutinen umfassen. Insbesondere können die elektronischen Bauteile der Recheneinheit auf einer Platine oder Leiterplatte angeordnet sein. In einer Ausführungsform ist die Recheneinheit integral mit einer Steuervorrichtung des Laserentfernungsmessgeräts ausgeführt. In einer Ausführungsform ist die Recheneinheit in Form eines Mikrokontrollers ausgeführt. Die Recheneinheit ist zur Berechnung einer Entfernung aus einer Entfernungsmessung mittels der Sendeeinrichtung und der Empfangseinrichtung vorgesehen und eingerichtet. Darüber hinaus ist die Recheneinheit auch zur Durchführung des erfindungsgemäßen Verfahrens vorgesehen und eingerichtet. Insbesondere ist die Recheneinheit dazu vorgesehen, eine Darstellung zu erzeugen, in der ein mit der Kamera erfasstes Bild der Zielumgebung des Zielpunktes mit einer Markierung des Zielpunkts gekennzeichnet ist. Dabei ist die Markierung als in das Bild eingeblendete oder mit dem Bild überblendete Markierung zu verstehen, die den Zielpunkt in dem Bild, insbesondere die Position des Zielpunkts in dem Bild, deutlich kennzeichnet und somit hervorhebt. Insbesondere kann die Markierung beispielsweise als Fadenkreuz, Quadrat, Kreis oder dergleichen realisiert sein. Die Recheneinheit ist daher dazu vorgesehen und eingerichtet, die Position des Zielpunkts in dem Bild zu berechnen und somit die Markierung an der Position des berechneten Zielpunkts einzublenden. In einer Ausführungsform berechnet die Recheneinheit die Position des Zielpunkts in dem Bild als Pixelkoordinaten. In einer Ausführungsform berechnet die Recheneinheit die Position des Zielpunkts aus geometrischen Größen des Laserentfernungsmessgeräts, insbesondere aus einem geometrischen Bezug der Kamera und der Sendeeinrichtung, genauer aus einem geometrischen Bezug der Richtung, in die die Kamera ein Bild erfasst, der Entfernungsmessrichtung, in die der Zielpunkt projiziert wird, sowie dem Abstand ("Basis-Abstand") der Kamera und der Sendeeinrichtung, insbesondere einer Laserdiode der Sendeeinrichtung, im Laserentfernungsmessgerät. Ferner ist die Recheneinheit dazu vorgesehen, den durch Überlagerung des Bilds mit der Markierung erzeugten Datensatz an einen Bildschirm des Laserentfernungsmessgeräts auszugeben, unter dessen Verwendung eine entsprechende Darstellung, wiederum in Form eines Bilds, an einen Bediener des Laserentfernungsmessgeräts ausgegeben wird. Erfindungsgemäß ist die Recheneinheit dazu vorgesehen und eingerichtet, einen Parallaxenfehler in dem Datensatz, d.h. in der Darstellung des Bilds überlagert mit der Markierung des Zielpunkts, in Abhängigkeit einer geschätzten Entfernung zum Zielpunkt zu korrigieren. Es sei angemerkt, dass die Recheneinheit alle zur Durchführung des erfindungsgemäßen Verfahrens benötigten Werte wie Basis-Abstand oder dergleichen geräteintern vorhält, insbesondere auf einem nichtflüchtigen, nichtlöschbaren Speicher.

Das erfindungsgemäße Verfahren zum Betrieb des Laserentfernungsmessgeräts findet beispielsweise Anwendung in einem Szenario, in dem ein Benutzer des Laserentfernungsmessgeräts eine Messung einer Entfernung zu einem weit entfernten Gegenstand, dem Zielobjekt, durchführen möchte. Dabei kann es vorkommen, insbesondere in einem hellen Außenbereich, dass der Zielpunkt auf Grund der großen Entfernung nicht mit dem Auge erkennbar ist. Das erfindungsgemäße Laserentfernungsmessgerät stellt daher auf seinem Bildschirm den Zielpunkt, überlagert mit und in dem mit der Kamera von der Zielumgebung des Zielpunkts erfassten Bild, dar. Auf diese Weise kann der Bediener des Laserentfernungsmessgeräts trotz der großen Entfernung die Position des Zielpunkts, d.h. die Richtung, in die die Entfernung mittels Laserentfernungsmessung bestimmt wird, feststellen. Möchte der Bediener beispielsweise eine Entfernung zu einem Holzpfosten bestimmen, so kann er auf dem Bildschirm ein Bild des Holzpfostens - oder je nach Entfernung und Zoom-Stufe der Kameraoptik einen Ausschnitt davon - betrachten. Dabei wird der Zielpunkt - typischerweise ein von roter Laserstrahlung erzeugter roter Punkt - ebenfalls von der Kamera erfasst und auf dem Bildschirm ausgegeben. In dem Bild ist ferner die berechnete Position des Zielpunkts als Markierung, insbesondere als Fadenkreuz, eingeblendet. Sollte der Bediener den Zielpunkt mit bloßem Auge also nicht mehr erkennen können - weder direkt auf dem Zielobjekt noch auf der mit dem Bildschirm ausgegebenen Darstellung des Bilds -, so kann er die Ausrichtung des Laserentfernungsmessgeräts, insbesondere des emittierten Laserstrahls, auf den Holzpfosten anhand des ausgegebenen Bilds überlagert mit der Markierung des Zielpunkts durchführen. Das Laserentfernungsmessgerät weist somit zur Verbesserung der Sichtbarkeit des Zielpunkts in der auf dem Bildschirm ausgegebenen Darstellung des mit der Kamera erfassten Bilds eine virtuelle optische Zieleinrichtung auf. Die Zieleinrichtung ermöglicht eine bezüglich Fehlmessungen durch fehlerhaftes Anvisieren eines Zielobjekts sichere Handhabung des Laserentfernungsmessgeräts.

Auf Grund der zueinander beabstandeten Anordnung von Sendeeinrichtung, insbesondere Laserdiode, und Kamera in dem Gehäuse des Laserentfernungsmessgeräts wird ein Parallaxenfehler verursacht. Der "Parallaxenfehler" ist dabei derjenige Winkel, der zwischen der optischen Achse der Sendeeinrichtung und der optischen Achse der Kamera entsteht, wobei die beiden Achsen von verschiedenen Ausgangspunkten - d.h. der Laserdiode und der Kamera (beabstandet durch den "Basis-Abstand") - auf denselben Punkt - den Zielpunkt - gerichtet sind. Der Parallaxenfehler ist entfernungsabhängig. Mit anderen Worten wird der Parallaxenfehler als derjenige (entfernungsabhängige) Winkel angesehen, unter dem der Basis-Abstand vom Zielpunkt aus erscheint. In der oben ausgeführten Implementierung der Laserentfernungsmessgeräts verursacht der Parallaxenfehler eine fehlerhafte oder zumindest ungenaue Positionierung der Markierung in der auf dem Bildschirm ausgegebenen Darstellung des Bilds überlagert mit der Markierung des Zielpunkts. Während für sehr große Entfernungen (beispielsweise 100 Meter) die Position der Markierung des Zielpunkts bezogen auf das Bild (d.h. in der auf dem Bildschirm ausgegebenen überlagerten Darstellung des Bilds) mit der tatsächlichen (bei entsprechenden Lichtverhältnissen) im Bild erkennbaren Position des abgebildeten Zielpunkts übereinstimmt (kleiner Parallaxenfehler), stimmt diese Übereinstimmung bei kleiner werdenden Entfernungen zunehmend weniger (oder prinzipiell auch umgekehrt möglich: große Entfernung - große Abweichung, kleine Entfernung - kleine Abweichung). Mit kleineren Entfernungen zwischen dem Laserentfernungsmessgerät und dem Zielobjekt nimmt der Parallaxenfehler zu. Die Markierung des Zielpunkts bezogen auf das Bild driftet daher für kleiner werdende Entfernungen zunehmend von der tatsächlichen im Bild erkennbaren Position des abgebildeten Zielpunkts in Richtung eines Parallaxenvektors weg (großer Parallaxenfehler). Der Parallaxenvektor zeigt konstruktionsbedingt in Richtung des Basis-Abstands.

Folglich äußert sich der konstruktionsbedingte Parallaxenfehler in dem erfindungsgemäßen Laserentfernungsmessgerät in einem entfernungsabhängigen lateralen Versatz der relativen Position von dem mit dem Bildschirm ausgegebenen Bild und von der mit dem Bild überlagert ausgegebenen Markierung des Zielpunkts zueinander. Erfindungsgemäß wird der Parallaxenfehler in der Darstellung des Bilds überlagert mit der Markierung des Zielpunkts in Abhängigkeit einer geschätzten Entfernung zum Zielpunkt korrigiert. Unter der "geschätzten Entfernung" ist hier insbesondere nicht die präzise zu ermittelnde oder ermittelte Entfernung, die aus einem zwischen der ausgesendeten Laserstrahlung und der von der Oberfläche des Zielobjekts reflektierten Laserstrahlung durchgeführten Phasenvergleich oder die aus einer Flugzeitbestimmung ermittelbar ist, zu verstehen. Vielmehr handelt es sich bei der geschätzten Entfernung um einen, insbesondere ungenauen oder unpräzisen, beispielsweise vor der Durchführung der eigentlichen Entfernungsmessung ermittelten Entfernungswert. Die geschätzte Entfernung kann in unterschiedlichen Ausführungsformen des Laserentfernungsmessgeräts auf unterschiedliche Weise unter Verwendung des Laserentfernungsmessgeräts ermittelt werden. Unter "Parallaxenfehler korrigieren" ist insbesondere zu verstehen, dass der besagte laterale Versatz der relativen Position von dem mit dem Bildschirm ausgegebenen Bild und von der mit dem Bild überlagert ausgegebenen Markierung des Zielpunkts in Abhängigkeit einer geschätzten Entfernung zum Zielpunkt angepasst, insbesondere korrigiert oder herausgerechnet, wird. In einer Ausführungsform des Verfahrens wird der Parallaxenfehler in der Darstellung des Bilds überlagert mit der Markierung des Zielpunkts durch Anpassen der relativen Position des ausgegebenen Bilds und der Markierung zueinander korrigiert. Unter Verwendung der Recheneinheit wird beispielsweise ein lateraler Versatz, der zur Korrektur angewandt werden muss, zunächst unter Anwendung trigonometrischer Funktionen aus der geschätzten Entfernung und dem gerätespezifischen Basis-Abstand berechnet und in einen Korrekturwert auf Pixelebene (Pixelkoordinaten) des Bilds umgerechnet. Anschließend kann die relative Position des ausgegebenen Bilds und der Markierung zueinander im Rahmen eines von der Recheneinheit durchgeführten Bildverarbeitungsalgorithmus beeinflusst und korrigiert werden. In einer Ausführungsform kann die Position des ausgegebenen Bilds relativ zur Markierung verschoben werden, insbesondere kann auch ein Bildausschnitt verändert und/oder verschoben werden. Diese Umsetzung stellt sich für einen Bediener des Laserentfernungsmessgeräts beispielsweise derart dar, dass stets der Zielpunkt im Mittelpunkt der auf dem Bildschirm ausgegebenen Darstellung befindlich ist - in einer Ausführungsform zusätzlich markiert mit einer Markierung (Markierung bleibt unverändert im Zentrum des Bildschirms; Bild(ausschnitt) wird verschoben). Alternativ oder zusätzlich kann auch die Position der Markierung relativ zur auf dem Bildschirm ausgegebenen Darstellung des Bilds angepasst und verschoben werden. Diese Umsetzung stellt sich für einen Bediener des Laserentfernungsmessgeräts beispielsweise derart dar, dass eine Markierung des Zielpunkts für kleiner werdende Entfernungen zu einer Seite des Bildschirms "wandert" (Markierung bleibt nicht im Zentrum des Bildschirms). Somit wird vorteilhaft erreicht, dass für jede beliebige Entfernung von Laserentfernungsmessgerät und Zielobjekt zueinander die Position der Markierung des Zielpunkts bezogen auf das Bild (d.h. in der auf dem Bildschirm ausgegebenen überlagerten Darstellung des Bilds) mit der tatsächlichen (bei entsprechenden Lichtverhältnissen) im Bild erkennbaren Position des abgebildeten Zielpunkts übereinstimmt. Ferner kann in einer Ausführungsform vorgesehen sein, die Einblendung, d.h. die überlagerte Darstellung von Bild und Markierung, für Entfernungen unterhalb eines vorgegebenen Schwellwerts zu deaktivieren (beispielsweise für Entfernungen unterhalb von 5 Metern).

Auf Grundlage des erfindungsgemäßen Verfahrens kann eine besonders intuitive und somit einfache Bedienung des Laserentfernungsmessgeräts durch den Benutzer realisiert werden. Eine Fehlbedienung des Laserentfernungsmessgeräts, insbesondere eine falsch durchgeführte Ausrichtung des Laserentfernungsmessgeräts, kann vermieden werden.

In einer Ausführungsform des Verfahrens zum Betrieb des Laserentfernungsmessgeräts erfolgt die Ausgabe der Darstellung des Bildes überlagert mit der Markierung in Echtzeit, insbesondere synchron zu einer Bewegung des Laserentfernungsmessgeräts. Auf diese Weise wird während der Bewegung des Laserentfernungsmessgeräts durch den Benutzer stets ein aktuelles Bild der zu dem gegebenen Zeitpunkt anvisierten Zielumgebung des aktuell angepeilten Zielpunkts ausgegeben. Gleichzeitig mit der aktualisierten Ausgabe des Bildes wird auch die Markierung des Zielpunkts in der Darstellung aktualisiert und daher entfernungsabhängig korrigiert dargestellt. Unter "in Echtzeit" und "synchron zu einer Bewegung des Laserentfernungsmessgeräts" soll in diesem Zusammenhang insbesondere verstanden werden, dass die Verarbeitungsgeschwindigkeit der Recheneinheit derart hoch ist, dass sich eine Umpositionierung des Laserentfernungsmessgeräts im Raum durch den Benutzer unmittelbar in einer Änderung des dargestellten Bildes, insbesondere überlagert mit der Markierung, auswirkt. Auf diese Weise kann der Benutzer des Laserentfernungsmessgeräts eine mit dem Laserentfernungsmessgerät ausgeführte Bewegung im Raum direkt, d.h. "synchron", einer Änderung des ausgegebenen Bildes samt Markierung zuordnen.

Erst die Verwendung der "geschätzten Entfernung" als Grundlage der Korrektur des Parallaxenfehlers ermöglicht eine derart hohe Verarbeitungsgeschwindigkeit, die die Ausgabe in Echtzeit, insbesondere synchron zu einer Bewegung des Laserentfernungsmessgeräts, erlaubt. Insbesondere kann erfindungsgemäß eine Rechenleistung zur Durchführung des Verfahrens gering gehalten werden, da geschätzte Entfernungen mit einfacheren Mitteln, insbesondere basierend auf geringeren Rechenleistungen, erhalten werden können. Während beispielsweise die Berechnung eines Phasenvergleichs hohe Anforderungen an eine Recheneinheit stellt hinsichtlich einer Rechenleistung, erfordert die Ermittlung einer geschätzten Entfernung durch Ermitteln einer Position des von der zurückgestrahlten Laserstrahlung auf der Detektionsfläche hervorgerufenen Lichtflecks nur eine sehr geringe Rechenleistung. Ferner kann durch signifikante Vereinfachung des Verfahrens eine Beschleunigung der Durchführung des Verfahrens erreicht werden. Während eine typische Entfernungsmessung basierend auf einem zwischen der ausgesendeten Laserstrahlung und der von der Oberfläche des Zielobjekts reflektierten Laserstrahlung durchgeführten Phasenvergleich oder basierend auf einer Flugzeitbestimmung mit einer zeitlichen Wiederholrate von 10 Hz möglich ist, kann unter Verwendung der geschätzten Entfernung diese Wiederholrate signifikant gesteigert werden. Beispielsweise kann eine Wiederholrate auf weit über 20 Hz, insbesondere 30 Hz oder 40 Hz oder sogar mehr, gesteigert werden. Einem Bediener des Laserentfernungsmessgeräts erscheint dann die Ausgabe der Darstellung des Bildes ohne Verzögerungen gegenüber einer Bewegung des Laserentfernungsmessgeräts, also tatsächlich synchron, während bei einer Wiederholrate von beispielsweise 10 Hz ein deutlich erkennbares "Nachlaufen" der Markierung in der Darstellung gegenüber dem tatsächlich erkennbaren Zielpunkt in dem Bild sichtbar ist. Durch eine hohe Verarbeitungsrate kann bei dem Benutzer des Laserentfernungsmessgeräts der Eindruck entstehen, dass Bilddaten für einen mit dem Laserentfernungsmessgerät anvisierten Zielbereich, insbesondere einer Zielumgebung eines Zielpunkts, unmittelbar ausgewertet und die Markierung unmittelbar korrekt dargestellt wird.

Unter einer Ausgabe der Darstellung des Bilds überlagert mit der Markierung "in Echtzeit" ist dann auszugehen, wenn die geräteinterne Verarbeitungsdauer bis zur fertiggestellten Ausgabe insbesondere weniger als 0,5 Sekunden, bevorzugt weniger als 0,1 Sekunden, besonders bevorzugt weniger als 0,05 Sekunden beträgt. Dadurch kann der Benutzer des Laserentfernungsmessgeräts besonders schnell, verzögerungsfrei und somit sicher erkennen, auf welchen Zielpunkt das Laserentfernungsmessgerät ausgerichtet ist. Vorteilhaft kann somit ein besonders effizientes und intuitiv bedienbares Laserentfernungsmessgerät mit hohem Bedienkomfort bereitgestellt werden.

In einer Ausführungsform des Verfahrens wird die geschätzte Entfernung aus einer Position des von der zurückgestrahlten Laserstrahlung auf der Detektionsfläche hervorgerufenen Lichtflecks ermittelt. Die Recheneinheit ist dabei insbesondere dazu vorgesehen und eingerichtet, aus der ermittelten Position des von der zurückgestrahlten Laserstrahlung auf der Detektionsfläche hervorgerufenen Lichtflecks nach dem Prinzip der Triangulation die Entfernung des Zielpunkts als geschätzte Entfernung zu bestimmen. Dazu greift die Recheneinheit auf einen Basis-Abstand von Detektionsfläche zu Sendeeinrichtung, insbesondere Laserdiode, sowie auf trigonometrische Funktionen zurück. Je kleiner die Entfernung zum Zielobjekt, umso weiter "wandert" der Lichtfleck auf der Detektionsfläche auf der Achse (Parallaxenvektor), die sich als Schnittgerade von Parallaxenebene und Detektionsfläche ergibt. Die Parallaxenebene stellt dabei diejenige Ebene dar, die durch den Detektionsflächenmittelpunkt, die Laserdiode und die Entfernungsmessrichtung aufgespannt wird. Die Position kann in einer Ausführungsform über eine Schwerpunktsbestimmung der Koordinaten der von dem Lichtfleck beleuchteten Pixel der Detektionsfläche bestimmt werden.

Alternativ oder zusätzlich kann die Position auch durch Ermittlung zumindest eines von dem Lichtfleck beleuchteten Pixels erfolgen.

In einer Ausführungsform des Verfahrens wird die geschätzte Entfernung aus einer Größe des von der zurückgestrahlten Laserstrahlung auf der Detektionsfläche hervorgerufenen Lichtflecks ermittelt wird. Dabei wird die geschätzte Entfernung aus der Größe des Lichtflecks, insbesondere dessen Durchmesser, mittels einer bekannten Brennweite und Bildweite der Empfangsoptik der Empfangseinrichtung ermittelt. Insbesondere ist die Recheneinheit dazu vorgesehen, aus der Größe, insbesondere der Form, bevorzugt dem Durchmesser des Lichtflecks auf der Detektionsfläche eine geschätzte Entfernung des Zielobjekts zu bestimmen. In einer Ausführungsform des Verfahrens wird die Größe des Lichtflecks aus der von dem Lichtfleck bedeckten Fläche auf der Detektionsfläche ermittelt. In einer alternativen oder zusätzlichen Ausführungsform des Verfahrens wird die Größe des Lichtflecks aus der Länge eines Schnitts der von dem Lichtfleck bedeckten Fläche auf der Detektionsfläche ermittelt. Dabei kann der Schnitt beispielsweise einer Sehne (bei einem als im Wesentlichen kreisförmig angenommenen Lichtfleck) und/oder dem Durchmesser der von dem Lichtfleck bedeckten Fläche entsprechen. In einer Ausführungsform des Verfahrens wird die Größe des Lichtflecks aus der Anzahl beleuchteter Pixel derjenigen Pixelzeile der Detektionsfläche ermittelt, die im Wesentlichen in der Parallaxenebene liegt, insbesondere im Wesentlichen kollinear zur Richtung einer Strahlverschiebung bezüglich der Detektionsfläche für unterschiedliche Entfernungen zum Zielpunkt, verläuft. Diese eignet sich insbesondere dann, wenn eine Pixelzeile der Detektionsfläche konstruktionsbedingt in der Parallaxenebene liegt. Somit kann durch Auslesen der Messwerte einer Pixelzeile der Detektionsfläche auf besonders schnelle und einfache Weise ein Durchmesser oder zumindest eine Sehne des Lichtflecks - beide repräsentativ für die Größe des Lichtflecks - ermittelt werden und daraus eine geschätzte Entfernung bestimmt werden.

Es sei darauf hingewiesen, dass die Ermittlung der Position oder der Größe des Lichtflecks bei einem Laserentfernungsmessgerät mit einer Detektionsfläche standardmäßig durchgeführt wird, um bereits diejenigen Pixel der Detektionsfläche zu ermitteln, die bei der Entfernungsmessung zu verwenden sind (Reduzierung des Signal-zu-Rauschverhältnisses). Somit kann auf diese Weise eine besonders Ressourcen sparende Ausführungsform des Verfahrens angegeben werden.

In einer Ausführungsform kann die Auswertung der Position des von der zurückgestrahlten Laserstrahlung auf der Detektionsfläche hervorgerufenen Lichtflecks und die Auswertung der Größe des von der zurückgestrahlten Laserstrahlung auf der Detektionsfläche hervorgerufenen Lichtflecks genutzt werden, um die Genauigkeit der geschätzten Entfernung zu erhöhen. Beispielsweise kann zur Korrektur des Parallaxenfehlers eine gemittelte geschätzte Entfernung bestimmt werden.

In einer Ausführungsform des Verfahrens wird die geschätzte Entfernung aus einer radiometrischen Messgröße ermittelt. Die radiometrische Messgröße kann dabei ausgewertet werden, um Rückschlüsse auf die geschätzte Entfernung des Zielobjekts zum Laserentfernungsmessgerät zu ziehen. In einer Ausführungsform des Verfahrens beschreibt die radiometrische Messgröße eine Signalamplitude der mit der Detektionsfläche empfangenen zurückgestrahlten Laserstrahlung.

Diese Signalamplitude skaliert unmittelbar mit der Entfernung des Zielobjekts zum Laserentfernungsmessgerät und kann daher vorteilhaft genutzt werden, die geschätzte Entfernung auf besonders einfache Weise zu ermitteln. Das Auslesen der Detektionsfläche nach einem Maximalwert in der Signalamplitude, der für die zurückgestrahlte Laserstrahlung charakteristisch ist, kann auf besonders schnelle Weise erfolgen. Die Signalamplitude kann dabei die von der Detektionsfläche empfangene Leistung (Watt) der Laserstrahlung betreffen und/oder eine Zählrate oder dergleichen. Der Vergleich des erhaltenen Werts mit einem Referenzwert, der bei einer (initialen oder zurückliegenden) Entfernungsmessung erhalten wird, erlaubt folglich die Umrechnung der Signalamplitude in eine geschätzte Entfernung. Alternativ oder zusätzlich kann in einer Ausführungsform des Verfahrens die radiometrische Messgröße ein Signal-zu-Rauschverhältnis der mit der Detektionsfläche empfangenen zurückgestrahlten Laserstrahlung beschreiben. Das Signal-zu-Rauschverhältnis kann dabei ebenfalls auf besonders einfache Weise unmittelbar aus den von der Detektionsfläche erzeugten Messwerten erhalten werden.

Ferner wird ein erfindungsgemäßes Laserentfernungsmessgerät, insbesondere ein angehaltenes Laserentfernungsmessgerät, zur Durchführung des erfindungsgemäßen Verfahrens vorgeschlagen. Das Laserentfernungsmessgerät weist, wie beschrieben, zumindest eine Sendeeinrichtung zum Aussenden von Laserstrahlung zu dem Zielpunkt, eine Empfangsrichtung mit einer Detektionsfläche zur Erfassung von von dem Zielpunkt zurückgestrahlter Laserstrahlung, eine Kamera zur Erfassung zumindest eines Bilds zumindest einer Zielumgebung des Zielpunkts, einen Bildschirm zur Ausgabe einer Darstellung des Bilds überlagert mit einer Markierung des Zielpunkts sowie eine Recheneinheit zur Durchführung des erfindungsgemäßen Verfahrens auf.

### Zeichnungen

Die Erfindung ist anhand von in den Zeichnungen dargestellten Ausführungsbeispielen in der nachfolgenden Beschreibung näher erläutert. Die Zeichnungen, die Beschreibung und die Ansprüche enthalten zahlreiche Merkmale in Kombination. Der Fachmann wird die Merkmale zweckmäßiger Weise auch einzeln betrachten und zu sinnvollen weiteren Kombinationen zusammenfassen. Gleiche Bezugszeichen in den Figuren bezeichnen gleiche Elemente.

Es zeigen:
- Figur 1: eine perspektivische Ansicht einer Ausgestaltung des erfindungsgemäßen Laserentfernungsmessgeräts;
- Figur 2a: eine schematische Seitenansicht der geometrischen Verhältnisse der der Strahlenoptik bei verhältnismäßig großer Entfernung von Laserentfernungsmessgerät und Zielobjekt;
- Figur 2b: eine schematische Aufsicht auf die Detektionsfläche des Laserentfernungsmessgeräts samt Lichtfleck bei verhältnismäßig großer Entfernung von Laserentfernungsmessgerät und Zielobjekt;
- Figur 2c: eine schematische Aufsicht auf eine Ausführungsform des Laserentfernungsmessgerät mit auf dem Bildschirm ausgegebener Darstellung eines Bilds der Zielumgebung des Zielpunkts überlagert mit einer Markierung des Zielpunkts bei verhältnismäßig großer Entfernung von Laserentfernungsmessgerät und Zielobjekt;
- Figur 3a: eine schematische Seitenansicht der geometrischen Verhältnisse der der Strahlenoptik bei verhältnismäßig kleiner Entfernung von Laserentfernungsmessgerät und Zielobjekt;
- Figur 3b: eine schematische Aufsicht auf die Detektionsfläche des Laserentfernungsmessgeräts samt Lichtfleck bei verhältnismäßig kleiner Entfernung von Laserentfernungsmessgerät und Zielobjekt;
- Figur 3c: eine schematische Aufsicht auf eine Ausführungsform des Laserentfernungsmessgerät mit auf dem Bildschirm ausgegebener Darstellung eines Bilds der Zielumgebung des Zielpunkts überlagert mit einer Markierung des Zielpunkts bei verhältnismäßig kleiner Entfernung von Laserentfernungsmessgerät und Zielobjekt;
- Figur 4: eine schematische Darstellung des erfindungsgemäßen Verfahrens in einem Verfahrensdiagramm.

### Beschreibung der Ausführungsbeispiele

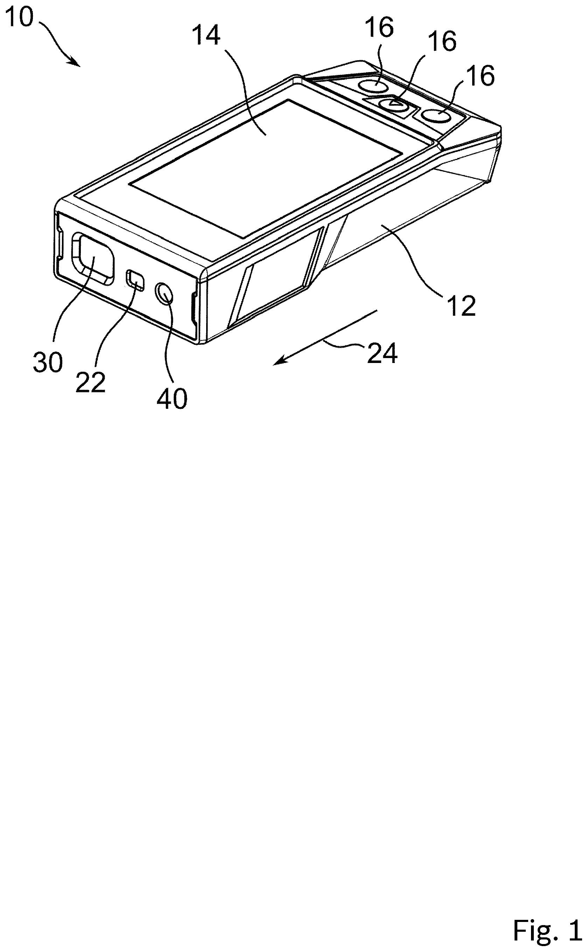

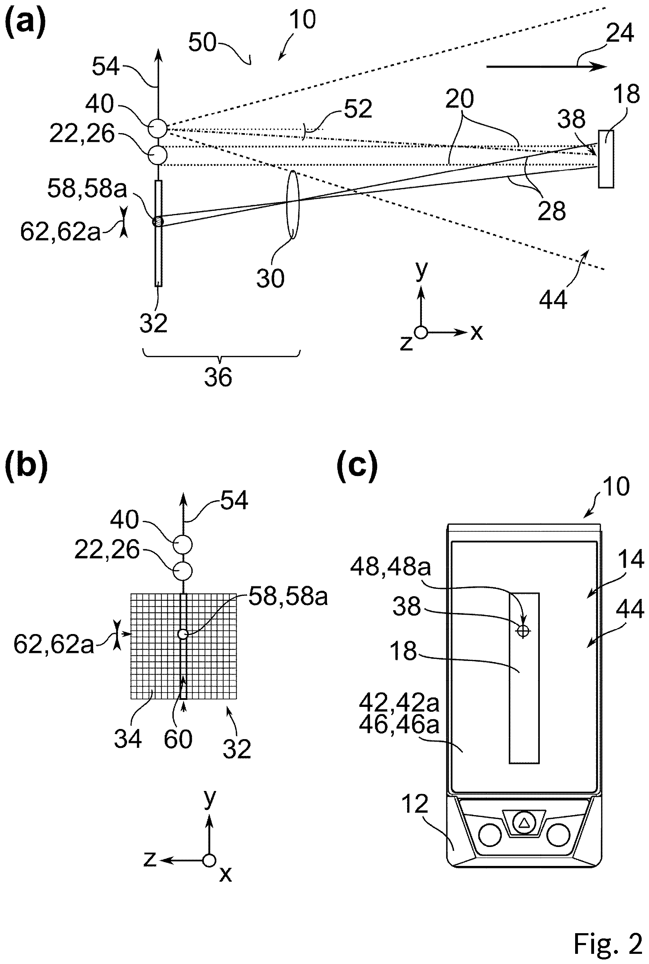

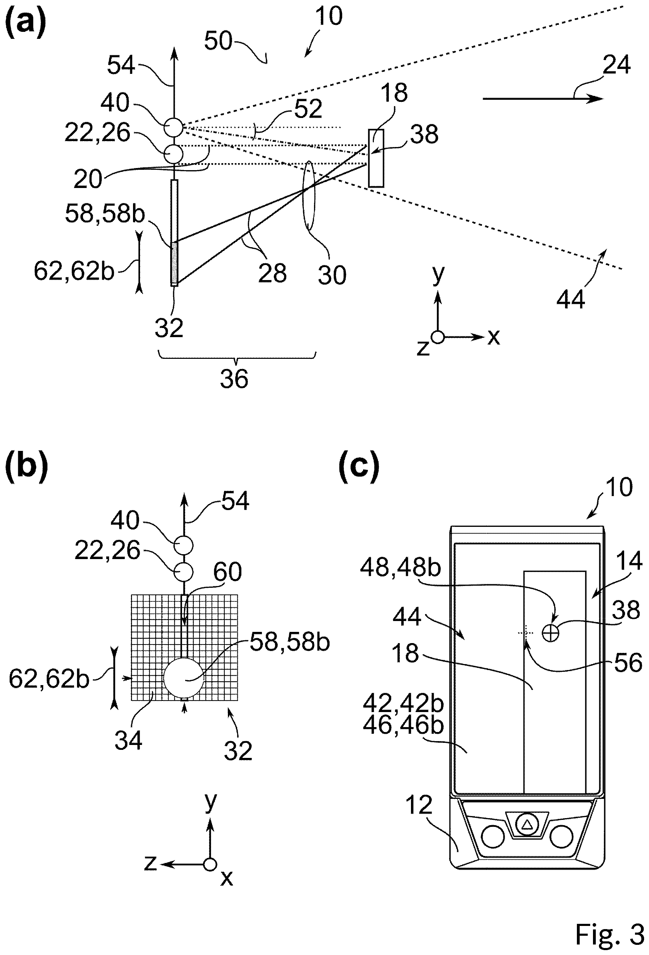

Figur 1 zeigt in perspektivischer Darstellung ein beispielhaft ausgeführtes, handgehaltenes Laserentfernungsmessgerät 10, das ein Gehäuse 12, einen Bildschirm 14 sowie Betätigungselemente 16 zum Ein- und Ausschalten des Laserentfernungsmessgeräts 10 und zum Starten bzw. Konfigurieren eines Messvorgangs aufweist. Zur Messung der Entfernung des Laserentfernungsmessgeräts 10 zu einem Zielobjekt 18 (vgl. Figur 2) wird im Betrieb des Laserentfernungsmessgeräts 10 parallele Laserstrahlung 20 (dargestellt durch zwei die Laserstrahlung begrenzende Strahlen, vgl. Figur 2a, 3a) über eine Sendeoptik 22, die beispielsweise aus einem nicht näher dargestellten Linsensystem besteht, in Richtung des Zielobjekts 18 gesendet. Die Richtung, in die das Laserentfernungsmessgerät 10 Laserstrahlung emittiert, wird im Folgenden Entfernungsmessrichtung 24 genannt. Die Sendeoptik 22 sowie eine kollimierte Laserdiode 26 (vgl. Figur 2a, 3a) sind Bestandteil der Sendeeinrichtung des Laserentfernungsmessgeräts 10. Die von einer Oberfläche des Zielobjekts 18 reflektierte Laserstrahlung 28 (ebenfalls dargestellt durch zwei die zurückstrahlende Laserstrahlung begrenzende Strahlen, vgl. Figur 2a, 3a) wird über eine Empfangsoptik 30 (hier in Form einer Linse) auf eine zweidimensionale Detektionsfläche 32 geleitet und dort detektiert (vgl. Figur 2a, 2b sowie Figur 3a, 3b). Die zweidimensionale Detektionsfläche 32 ist als eine zweidimensionale Anordnung ("Array") von 17x17 in einer Matrix angeordneten Single-Photon-Avalanche-Dioden 34 (SPADs) als Pixel (im Folgenden wird Pixel mit SPAD gleichgesetzt) gebildet, wobei jede SPAD 34 dazu vorgesehen ist, abhängig von einer auftreffenden Lichtintensität zurückgestrahlter Laserstrahlung 28 ein Detektionssignal zu erzeugen und zur weiteren Verarbeitung, insbesondere an eine nicht näher dargestellte Recheneinheit oder an eine nicht näher dargestellte Steuervorrichtung des Laserentfernungsmessgeräts 10, auszugeben. Die Empfangsoptik 30 und die Detektionsfläche 32 sind Bestandteil einer Empfangseinrichtung 36. Aus einem zwischen der ausgesendeten Laserstrahlung 20 und der von der Oberfläche des Zielobjekts 18 reflektierten Laserstrahlung 28 durchgeführten Phasenvergleich kann eine Lichtlaufzeit ermittelt und über die Lichtgeschwindigkeit die gesuchte Entfernung zwischen Laserentfernungsmessgerät 10 und Zielobjekt 18 in Entfernungsmessrichtung 24 bestimmt werden. Die Laserstrahlung 20,28 ist in diesem Ausführungsbeispiel als rotes Laserlicht realisiert. Auf dem Zielobjekt 18 erzeugt die emittierte Laserstrahlung 20 einen projizierten Laserpunkt, den sogenannten Zielpunkt 38.

Das Laserentfernungsmessgerät 10 weist ferner eine Kamera 40 auf, die zur Aufnahme zumindest eines Bildes 42,42a,42b einer Zielumgebung 44 (in Figuren 2a und 3a dargestellt durch einen Empfangskegel, aus dem Licht durch die Kamera 40 empfangen wird) des Zielpunkts 38 vorgesehen ist. Die Kamera 40 ist dabei in dem Laserentfernungsmessgerät 10 derart untergebracht, insbesondere in dem Gehäuse 12 des Laserentfernungsmessgeräts 10 derart untergebracht, dass sie in Entfernungsmessrichtung 24 ausgerichtet ist. Somit ist die Kamera 40 bezogen auf das Gehäuse 12 ortsfest in dem Gehäuse 12 untergebracht. Die Kamera 40 ist als ein CCD-Chip realisiert und stellt eine Fix-Fokus-Kamera dar.

Das Laserentfernungsmessgerät 10 weist zu dessen Energieversorgung eine nicht näher dargestellte Energieversorgungsvorrichtung, insbesondere eine Batterie oder einen Akkumulator, bevorzugt einen Lithium-Ionen-Akkumulator, auf.

Ferner weist das Laserentfernungsmessgerät 10 in den Figuren nicht näher dargestellte Komponenten auf. Diese umfassen zumindest eine Recheneinheit. Die Recheneinheit weist insbesondere Komponenten auf, die zumindest einen Prozessor, einen Speicher und ein Betriebsprogramm mit Auswerte- und Berechnungsroutinen umfassen. Die Recheneinheit ist vorgesehen zur Berechnung einer Entfernung aus einer Entfernungsmessung sowie zur Erzeugung einer Darstellung 46,46a,46b, in der ein mit der Kamera 40 erfasstes Bild 42,42a,42b der Zielumgebung 44 des Zielpunktes 38 überlagert mit einer Markierung 48,48a,48b des Zielpunkts 38 (vgl. Figuren 2c und 3c), hier ein Fadenkreuz, gekennzeichnet ist. Die Markierung 48,48a,48b ist in das Bild 42,42a,42b eingeblendet und kennzeichnet den Zielpunkt 38 in dem Bild 42,42a,42b. Die Recheneinheit ist dazu vorgesehen, die Position, an der die Markierung 48,48a,48b platziert werden soll, für ein aufgenommenes Bild 42,42a,42b zu berechnen und somit die Markierung 48,48a,48b an der Position des berechneten Zielpunkts 38 einzublenden. Ferner ist die Recheneinheit dazu vorgesehen, den durch Überlagerung des Bilds 42,42a,42b mit der Markierung 48,48a,48b erzeugten Datensatz (d.h. die Darstellung 46,46a,46b) an den Bildschirm 14 des Laserentfernungsmessgeräts 10 auszugeben. Mittels des Bildschirms 14 wird die entsprechende Darstellung 46,46a,46b, wiederum in Form eines Bilds, an einen Bediener des Laserentfernungsmessgeräts 10 ausgegeben. Außerdem ist die Recheneinheit dazu vorgesehen und eingerichtet, einen Parallaxenfehler in dem Datensatz, d.h. in der Darstellung 46,46a,46b des Bilds 42,42a,42b überlagert mit der Markierung 48,48a,48b des Zielpunkts 38, in Abhängigkeit einer geschätzten Entfernung zum Zielpunkt 38 zu korrigieren. Die Recheneinheit verfügt über alle zur Durchführung des erfindungsgemäßen Verfahrens benötigten Werte wie Basis-Abstände oder dergleichen.

Figuren 2a und 3a stellen die dem Verfahren zu Grunde liegenden geometrischen Gegebenheiten schematisch dar, wobei zur Erklärung auf ein Modell der Strahlenoptik zurückgegriffen wird. Die Figuren 2a und 3a zeigen jeweils eine Seitenansicht der geräteinternen optischen Komponenten des Laserentfernungsmessgeräts 10, eines Zielobjekts 18 sowie der optischen Pfade im Sende- und Empfangspfad des Laserentfernungsmessgeräts 10. Figuren 2b und 3b zeigen jeweils eine Aufsicht auf die geräteinternen optischen Komponenten des Laserentfernungsmessgeräts 10, wie sie vom Zielpunkt 38 aus erscheinen (ohne Berücksichtigung des Gehäuses 12). Während in Figur 2 (Teil a,b,c) eine Entfernung zwischen dem Laserentfernungsmessgerät 10 und dem Zielobjekt 18 verhältnismäßig groß ist, ist diese in Figur 3 (Teil a,b,c) verhältnismäßig klein. Die folgende Beschreibung bezieht sich auf beide Figuren 2 und 3.

Die Laserdiode 26, Teil der Sendeeinrichtung, emittiert Laserstrahlung 20 in Entfernungsmessrichtung 24. Die Laserstrahlung 20 wird von dem Zielobjekt 18 reflektiert oder gestreut und läuft als zurückgestrahlte Laserstrahlung 28 zurück zum Laserentfernungsmessgerät 10. Die Detektionsfläche 32 des Laserentfernungsmessgeräts 10 dient der Erfassung der von dem Zielobjekt 18 zurückgestreuten Laserstrahlung 28. Die Kamera 40 befindet sich in einer Parallaxenebene 50 mit der Laserdiode 26 und der Detektionsfläche 32. Die Kamera 40 nimmt ein Bild 42,42a,42b einer Zielumgebung 44 des Zielpunkts 38 auf, dargestellt in Figur 2c für ein Messszenario, wie es in Figur 2a dargestellt ist (große Entfernung), und dargestellt in Figur 3c für ein Messszenario, wie es in Figur 3a dargestellt ist (kleine Entfernung). Auf Grund der zueinander beabstandeten Anordnung der Laserdiode 26 und der Kamera 40 wird ein entfernungsabhängiger Parallaxenfehler verursacht, hier dargestellt durch den Parallaxenwinkel 52. Der entfernungsabhängige Parallaxenfehler bewirkt - wie in Zusammenschau der Figuren 2 und 3 nachvollzogen werden kann - , dass für verhältnismäßig große Entfernungen (Figur 2) die Position der Markierung 48,48a des Zielpunkts 38 bezogen auf das Bild 42,42a (d.h. in der in Figur 2c auf dem Bildschirm ausgegebenen überlagerten Darstellung 46,46a) mit der tatsächlichen (bei entsprechenden Lichtverhältnissen) im Bild 42,42a erkennbaren Position des abgebildeten Zielpunkts 38 übereinstimmt, vgl. insbesondere Figur 2c (kleiner Parallaxenfehler). Im Gegensatz dazu weicht eine unkorrigierte Markierung 56 des Zielpunkts 38 bezogen auf das Bild 42,42b für verhältnismäßig kleine Entfernungen (Figur 3c) stark von der tatsächlichen im Bild 42,42b erkennbaren Position des abgebildeten Zielpunkts 38 in Richtung eines Parallaxenvektors 54 ab (lateraler Versatz der relativen Position von mit dem Bildschirm 14 ausgegebenen Bild 42,42b und von mit dem Bild 42,42b überlagert ausgegebener unkorrigierter Markierung 56 des Zielpunkts 38 zueinander). In Figur 3c ist weiter die mittels erfindungsgemäßem Verfahren um den Parallaxenfehler korrigierte Markierung 48,48b mit dem Bild 42,42b überlagert dargestellt. Dabei wird die Position der Markierung 48,48b relativ zur auf dem Bildschirm 14 ausgegebenen Darstellung 46,46b des Bilds 42,42b angepasst, d.h. entsprechend verschoben.

Die Recheneinheit des Laserentfernungsmessgeräts 10 bestimmt zur Durchführung der entfernungsabhängigen Parallaxenkorrektur eine geschätzte Entfernung aus einer Position des von der zurückgestrahlten Laserstrahlung 28 auf der Detektionsfläche 32 hervorgerufenen Lichtflecks 58,58a,58b mittels Triangulation. Die Position (Pixelkoordinaten) ist in Figur 2b und Figur 3b durch kleine Pfeile am Rande der Detektionsfläche 32 dargestellt und wird über eine Schwerpunktsbestimmung der Koordinaten der von dem Lichtfleck 58,58a,58b beleuchteten SPADs 34 der Detektionsfläche 32 bestimmt. Zusätzlich bestimmt die Recheneinheit eine geschätzte Entfernung aus einer Größe des von der zurückgestrahlten Laserstrahlung 28 auf der Detektionsfläche 32 hervorgerufenen Lichtflecks 58,58a,58b. Insbesondere bestimmt die Recheneinheit eine geschätzte Entfernung aus einer Größe des Lichtflecks 58,58a,58b aus der Anzahl beleuchteter SPADs 34 derjenigen Pixelzeile 60 der Detektionsfläche 32, die im Wesentlichen in der Parallaxenebene 50, insbesondere parallel oder kollinear zum Parallaxenvektor 54, liegt.

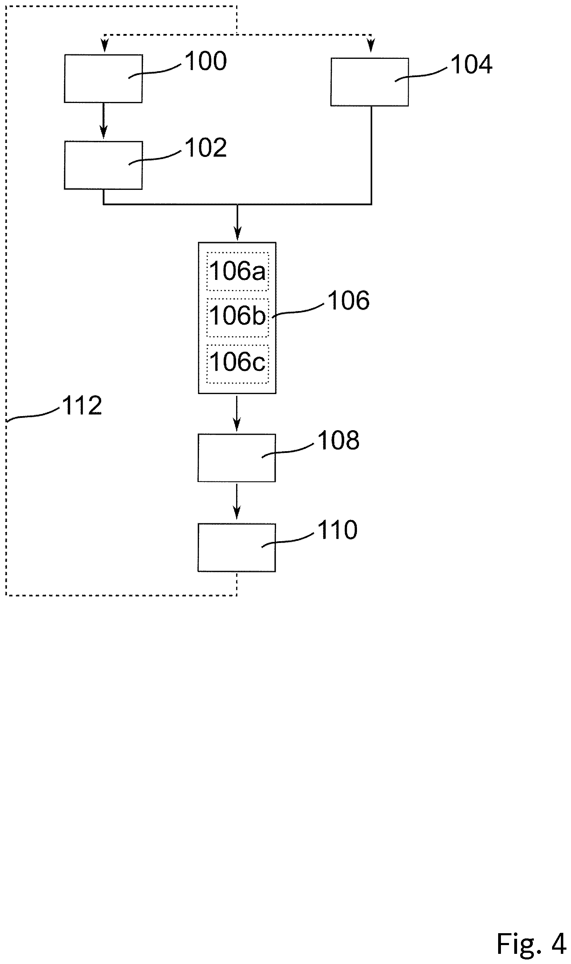

In Figur 4 ist eine Ausführungsform des erfindungsgemäßen Verfahrens anhand eines Verfahrensdiagramms dargestellt. In Verfahrensschritt 100 wird mittels einer Sendeeinrichtung Laserstrahlung 20 zu einem Zielpunkt 38 ausgesendet. In Verfahrensschritt 102 wird von dem Zielpunkt 38 zurückgestrahlte Laserstrahlung 28 mittels der Detektionsfläche 32 der Empfangseinrichtung 36 erfasst. Im Wesentlichen gleichzeitig wird in Verfahrensschritt 104 mit der Kamera 40 zumindest ein Bild 42,42a,42b der Zielumgebung 44 des Zielpunkts 38 erfasst. In Verfahrensschritt 106 wird eine geschätzte Entfernung zum Zielpunkt 38 ermittelt.

Die Ermittlung der geschätzten Entfernung kann aus der Position des von der zurückgestrahlten Laserstrahlung 28 auf der Detektionsfläche 32 hervorgerufenen Lichtflecks 58,58a,58b erfolgen (Option 106a, vgl. Beschreibung zu Figuren 2 und 3). Alternativ oder zusätzlich kann die Ermittlung der geschätzten Entfernung aus der Größe des von der zurückgestrahlten Laserstrahlung 28 auf der Detektionsfläche 32 hervorgerufenen Lichtflecks 58,58a,58b erfolgen. Insbesondere kann die Ermittlung der Größe des Lichtflecks 58,58a,58b aus der von dem Lichtfleck 58,58a,58b bedeckten Fläche auf der Detektionsfläche 32 erfolgen. Alternativ oder zusätzlich kann die Ermittlung der Größe des Lichtflecks 58,58a,58b aus der Länge 62,62a,62b eines Schnitts der von dem Lichtfleck 58,58a,58b bedeckten Fläche auf der Detektionsfläche 32 erfolgen (Option 106b, vgl. Beschreibung zu Figuren 2 und 3). Alternativ oder zusätzlich kann die Ermittlung der geschätzten Entfernung auch aus einer radiometrischen Messgröße erfolgen, insbesondere aus einer Signalamplitude der mit der Detektionsfläche 32 empfangenen zurückgestrahlten Laserstrahlung 28 und/oder aus einem Signal-zu-Rauschverhältnis der mit der Detektionsfläche 32 empfangenen zurückgestrahlten Laserstrahlung 28 (Option 106c).

In Verfahrensschritt 108 wird der Parallaxenfehler in der Darstellung des Bilds 42,42a,42b überlagert mit der Markierung 48,48a,48b des Zielpunkts 38 durch Anpassen der relativen Position des ausgegebenen Bilds 42,42a,42b und der dargestellten Markierung 48,48a,48b zueinander korrigiert. Abschließend wird in Verfahrensschritt 110 die Darstellung 46,46a,46b des Bilds 42,42a,42b überlagert mit der Markierung 48,48a,48b des Zielpunkts 38 auf einem Bildschirm 14 des Laserentfernungsmessgeräts 10 ausgegeben.

Das Verfahren läuft wiederholt ab, dargestellt durch den Pfeil 112.

## Patentansprüche

1. Verfahren zum Betrieb eines Laserentfernungsmessgeräts (10), bei dem Laserstrahlung (20) mittels einer Sendeeinrichtung zu einem Zielpunkt (38) ausgesendet wird, von dem Zielpunkt (38) zurückgestrahlte Laserstrahlung (28) mittels einer Empfangseinrichtung (36) mit einer Detektionsfläche (32) erfasst wird, mit zumindest einer Kamera (40) zumindest ein Bild (42,42a,42b) zumindest einer Zielumgebung (44) des Zielpunkts (38) erfasst wird, sowie eine Darstellung (46,46a,46b) des Bilds (42,42a,42b) überlagert mit einer Markierung (48,48a,48b) des Zielpunkts (38) auf einem Bildschirm (14) des Laserentfernungsmessgeräts (10) ausgegeben wird, wobei ein Parallaxenfehler in der Darstellung (46,46a,46b) des Bilds (42,42a,42b) überlagert mit der Markierung (48,48a,48b) des Zielpunkts (38) in Abhängigkeit einer geschätzten Entfernung zum Zielpunkt (38) korrigiert wird, **dadurch gekennzeichnet, dass** die geschätzte Entfernung aus einer Position des von der zurückgestrahlten Laserstrahlung (28) auf der Detektionsfläche (32) hervorgerufenen Lichtflecks (58,58a,58b) ermittelt wird und/oder aus einer Größe des von der zurückgestrahlten Laserstrahlung (28) auf der Detektionsfläche (32) hervorgerufenen Lichtflecks (58,58a,58b) ermittelt wird.

2. Verfahren nach Anspruch 1, **dadurch gekennzeichnet, dass** die Größe des Lichtflecks (58,58a,58b) aus der von dem Lichtfleck (58,58a,58b) bedeckten Fläche auf der Detektionsfläche (32) ermittelt wird.

3. Verfahren nach Anspruch 1 oder 2, **dadurch gekennzeichnet, dass** die Größe des Lichtflecks (58,58a,58b) aus der Länge eines Schnitts der von dem Lichtfleck (58,58a,58b) bedeckten Fläche auf der Detektionsfläche (32) ermittelt wird.

4. Verfahren nach Anspruch 2, **dadurch gekennzeichnet, dass** die Größe des Lichtflecks (58,58a,58b) aus der Anzahl beleuchteter Pixel (34) derjenigen Pixelzeile (60) der Detektionsfläche (32) ermittelt wird, die im Wesentlichen in der Parallaxenebene (50) liegt, insbesondere im Wesentlichen kollinear zur Richtung einer Strahlverschiebung bezüglich der Detektionsfläche für unterschiedliche Entfernungen zum Zielpunkt (38), verläuft.

5. Verfahren nach einem der vorhergehenden Ansprüche, **dadurch gekennzeichnet, dass** die geschätzte Entfernung aus einer radiometrischen Messgröße ermittelt wird.

6. Verfahren nach Anspruch 5, **dadurch gekennzeichnet, dass** die radiometrische Messgröße eine Signalamplitude der mit der Detektionsfläche (32) empfangenen zurückgestrahlten Laserstrahlung (28) beschreibt.

7. Verfahren nach Anspruch 5, **dadurch gekennzeichnet, dass** die radiometrische Messgröße ein Signal-zu-Rauschverhältnis der mit der Detektionsfläche (32) empfangenen zurückgestrahlten Laserstrahlung (28) beschreibt.

8. Verfahren nach einem der vorhergehenden Ansprüche, **dadurch gekennzeichnet, dass** der Parallaxenfehler in der Darstellung (46,46a,46b) des Bilds (42,42a,42b) überlagert mit der Markierung (48,48a,48b) des Zielpunkts (38) durch Anpassen der relativen Position des ausgegebenen Bilds (42,42a,42b) und der Markierung (48,48a,48b) zueinander korrigiert wird.

9. Laserentfernungsmessgerät (10), insbesondere handgehaltenes Laserentfernungsmessgerät (10), zum berührungslosen Messen einer Entfernung zu einem Zielpunkt (38), aufweisend zumindest eine Sendeeinrichtung zum Aussenden von Laserstrahlung (20) zu dem Zielpunkt (38), eine Empfangsrichtung (36) mit einer Detektionsfläche (32) zur Erfassung von von dem Zielpunkt (38) zurückgestrahlter Laserstrahlung (28), eine Kamera (40) zur Erfassung zumindest eines Bilds (42,42a,42b) zumindest einer Zielumgebung (44) des Zielpunkts (38) sowie einen Bildschirm (14) zur Ausgabe einer Darstellung (46,46a,46b) des Bilds (42,42a,42b) überlagert mit einer Markierung (48,48a,48b) des Zielpunkts (38), **gekennzeichnet durch** zumindest eine Recheneinheit, die zur Durchführung eines Verfahrens nach einem der Ansprüche 1 bis 8 vorgesehen ist.

10. Laserentfernungsmessgerät nach Anspruch 9, **dadurch gekennzeichnet, dass** die Detektionsfläche (32) als ein Single-Photon-Avalanche-Photo-Diode-Array (SPAD-Array) realisiert ist.

## Claims

1. Method for operating a laser distance measurement device (10), in which laser radiation (20) is emitted to a target point (38) by way of a transmission apparatus, laser radiation (28) reflected from the target point (38) is acquired by way of a reception apparatus (36) having a detection surface (32), at least one camera (40) is used to acquire at least one image (42, 42a, 42b) of at least one target environment (44) of the target point (38), and a display (46, 46a, 46b) of the image (42, 42a, 42b) overlaid with a marker (48, 48a, 48b) of the target point (38) is output on a screen (14) of the laser distance measurement device (10), wherein a parallax error in the display (46, 46a, 46b) of the image (42, 42a, 42b) overlaid with the marker (48, 48a, 48b) of the target point (38) is corrected depending on an estimated distance to the target point (38), **characterized in that** the estimated distance is determined from a position of the light spot (58, 58a, 58b) brought about by the reflected laser radiation (28) on the detection surface (32) and/or is determined from a size of the light spot (58, 58a, 58b) brought about by the reflected laser radiation (28) on the detection surface (32).

2. Method according to Claim 1, **characterized in that** the size of the light spot (58, 58a, 58b) is determined from the surface area covered by the light spot (58, 58a, 58b) on the detection surface (32).

3. Method according to Claim 1 or 2, **characterized in that** the size of the light spot (58, 58a, 58b) is determined from the length of a section of the surface area covered by the light spot (58, 58a, 58b) on the detection surface (32).

4. Method according to Claim 2, **characterized in that** the size of the light spot (58, 58a, 58b) is determined from the number of illuminated pixels (34) of that pixel row (60) of the detection surface (32) that lies substantially in the parallax plane (50), in particular runs substantially collinear to the direction of a beam displacement with respect to the detection surface for different distances to the target point (38).

5. Method according to one of the preceding claims, **characterized in that** the estimated distance is determined from a radiometric measured value.

6. Method according to Claim 5, **characterized in that** the radiometric measured value describes a signal amplitude of the reflected laser radiation (28) received by the detection surface (32).

7. Method according to Claim 5, **characterized in that** the radiometric measured value describes a signal-to-noise ratio of the reflected laser radiation (28) received by the detection surface (32).

8. Method according to one of the preceding claims, **characterized in that** the parallax error in the display (46, 46a, 46b) of the image (42, 42a, 42b) overlaid with the marker (48, 48a, 48b) of the target point (38) is corrected by adjusting the relative position of the output image (42, 42a, 42b) and of the marker (48, 48a, 48b) with respect to one another.

9. Laser distance measurement device (10), in particular hand-held laser distance measurement device (10), for the contactless measurement of a distance to a target point (38), having at least one transmission apparatus for emitting laser radiation (20) to the target point (38), a reception apparatus (36) having a detection surface (32) for acquiring laser radiation (28) reflected from the target point (38), a camera (40) for acquiring at least one image (42, 42a, 42b) of at least one target environment (44) of the target point (38), and a screen (14) for outputting a display (46, 46a, 46b) of the image (42, 42a, 42b) overlaid with a marker (48, 48a, 48b) of the target point (38), **characterized by** at least one computing unit that is intended to perform a method according to one of Claims 1 to 8.

10. Laser distance measurement device according to Claim 9, **characterized in that** the detection surface (32) is embodied as a single-photon avalanche photodiode array (SPAD array).

## Revendications

1. Procédé permettant de faire fonctionner un télémètre laser (10), dans lequel un rayonnement laser (20) est émis au moyen d'un dispositif d'émission à un point cible (38), le rayonnement laser (28) renvoyé par le point cible (38) est détecté au moyen d'un dispositif de réception (36) pourvu d'une surface de détection (32), au moins une caméra (40) détecte au moins une image (42, 42a, 42b) d'au moins un environnement cible (44) du point cible (38), et une représentation (46, 46a, 46b) de l'image (42, 42a, 42b) superposée avec un marquage (48, 48a, 48b) du point cible (38) est sortie sur un écran (14) du télémètre laser (10), dans lequel une erreur de parallaxe dans la représentation (46, 46a, 46b) de l'image (42, 42a, 42b) superposée avec le marquage (48, 48a, 48b) du point cible (38) est corrigée en fonction d'une distance estimée jusqu'au point cible (38),
**caractérisé en ce que** la distance estimée est déterminée à partir d'une position du spot lumineux (58, 58a, 58b) provoquée sur la surface de détection (32) par le rayonnement laser (28) renvoyé, et/ou est déterminée à partir d'une taille du spot lumineux (58, 58a, 58b) provoquée sur la surface de détection (32) par le rayonnement laser (28) renvoyé.

2. Procédé selon la revendication 1, **caractérisé en ce que** la taille du spot lumineux (58, 58a, 58b) est déterminée à partir de la superficie couverte par le spot lumineux (58, 58a, 58b) sur la surface de détection (32).

3. Procédé selon la revendication 1 ou 2, **caractérisé en ce que** la taille du spot lumineux (58, 58a, 58b) est déterminée à partir de la longueur d'une coupe de la superficie couverte par le spot lumineux (58, 58a, 58b) sur la surface de détection (32).

4. Procédé selon la revendication 2, **caractérisé en ce que** la taille du spot lumineux (58, 58a, 58b) est déterminée à partir du nombre de pixels éclairés (34) de la rangée de pixels (60) de la surface de détection (32) qui se trouve substantiellement dans le plan parallactique (50), en particulier de manière substantiellement colinéaire à la direction d'un décalage de faisceau par rapport à la surface de détection pour différentes distances jusqu'au point cible (38).

5. Procédé selon l'une quelconque des revendications précédentes, **caractérisé en ce que** la distance estimée est déterminée à partir d'une grandeur de mesure radiométrique.

6. Procédé selon la revendication 5, **caractérisé en ce que** la grandeur de mesure radiométrique décrit une amplitude de signal du rayonnement laser (28) renvoyé, reçu par la surface de détection (32).

7. Procédé selon la revendication 5, **caractérisé en ce que** la grandeur de mesure radiométrique décrit un rapport signal/bruit du rayonnement laser (28) renvoyé, reçu par la surface de détection (32).

8. Procédé selon l'une quelconque des revendications précédentes, **caractérisé en ce que** l'erreur de parallaxe dans la représentation (46, 46a, 46b) de l'image (42, 42a, 42b) superposée avec le marquage (48, 48a, 48b) du point cible (38) est corrigée par l'adaptation de la position relative de l'image sortie (42, 42a, 42b) et du marquage (48, 48a, 48b) l'une par rapport à l'autre.

9. Télémètre laser (10), en particulier télémètre laser portatif (10), permettant de mesurer sans contact une distance jusqu'à un point cible (38), présentant au moins un dispositif d'émission servant à émettre un rayonnement laser (20) jusqu'au point cible (38), un dispositif de réception (36) pourvu d'une surface de détection (32) servant à détecter le rayonnement laser (28) renvoyé par le point cible (38), une caméra (40) servant à détecter au moins une image (42, 42a, 42b) d'au moins un environnement cible (44) du point cible (38) ainsi qu'un écran (14) servant à sortir une représentation (46, 46a, 46b) de l'image (42, 42a, 42b) superposée avec un marquage (48, 48a, 48b) du point cible (38), **caractérisé par** au moins une unité de calcul qui est prévue pour exécuter un procédé selon l'une quelconque des revendications 1 à 8.

10. Télémètre laser selon la revendication 9, **caractérisé en ce que** la surface de détection (32) est réalisée sous la forme d'un réseau de photodiodes à avalanche à photon unique (réseau SPAD).
